# EUROPEAN PATENT APPLICATION

(11) **EP 4 693 119 A1**
(43) Date of publication of application: **11.02.2026**
(21) Application number: 23934651.3
(22) Date of filing: 28.04.2023
(51) Int. Cl.: G06N 20/00

(54) **ARTIFICIAL INTELLIGENCE MODEL MONITORING METHOD, SYSTEM, AND DEVICE, AND STORAGE MEDIUM**

(71) Applicant: Siemens Aktiengesellschaft, 80333 München (DE)
(72) Inventor: CUI, Yi, Shanghai 200082 (CN); XU, Hang, Shanghai 200082 (CN); ROTHERING, Marcel, 91058 Erlangen (DE); HU, Fei Huang, Shanghai 200082 (CN); ANICET ZANINI, Rafael, 91058 Erlangen (DE)
(74) Representative: Isarpatent
(86) International application number: PCT/CN2023/091845
(87) International publication number: WO 2024/221460

(57) **Abstract**

In implementations of the present invention, a monitoring method and system for an artificial intelligence model, a device, and a storage medium are disclosed. The method includes: obtaining real-time data of the edge device, where a trained artificial intelligence model is deployed in the edge device; determining, from the real-time data, first input data of the artificial intelligence model and first output data of the artificial intelligence model; and verifying the first input data based on a matching result between the first input data and a first boundary constraint rule; and/or detecting performance of the artificial intelligence model based on a matching result between the first output data and a second boundary constraint rule, where the first boundary constraint rule and the second boundary constraint rule are determined based on training data of the artificial intelligence model. The artificial intelligence model is monitored at the edge device, and the real-time data does not need to be sent to a cloud, thereby ensuring data security and further ensuring real-time performance.

## Description

The present invention relates to the field of artificial intelligence (Artificial Intelligence, AI) technologies, and in particular, to a monitoring method and system for an AI model, a device, and a storage medium.

### BACKGROUND

With continuous increase of requirements of different industries for an AI model, when the AI model is deployed on an edge device (for example, an industrial edge device), it is crucial to ensure performance of the AI model. Generally, a deployed AI model may fail to work as expected due to the following reasons: quality of production input data declines; and production data distribution is different from data distribution in a training stage. Therefore, monitoring the AI model is an important component of edge AI.

Currently, some cloud providers or open source software packages provide available AI monitoring solutions. However, the solutions have limitations when being applied to an edge device. These solutions require a user to periodically upload training data and production data to a cloud, and a monitoring result is only displayed in the cloud. Therefore, there are at least the following limitations: (1) Data is required to be uploaded and stored in the cloud, which is usually difficult for a factory to accept; (2) The production data is sent to the cloud at an interval, and therefore, a monitoring result is delayed; and (3) The monitoring result is displayed in the cloud, and an operation engineer of the factory is not directly notified, which is not convenient for the operation engineer to learn about the monitoring result in time.

### SUMMARY

In implementations of the present invention, a monitoring method and system for an AI model, a device, and a storage medium are proposed.

According to a first aspect, a monitoring method for an AI model is proposed. The method is applicable to an edge device, and the method includes:
obtaining real-time data of the edge device, where a trained AI model is deployed in the edge device;
determining, from the real-time data, first input data of the AI model and first output data of the AI model; and
verifying the first input data based on a matching result between the first input data and a first boundary constraint rule; and/or detecting performance of the AI model based on a matching result between the first output data and a second boundary constraint rule, where
the first boundary constraint rule and the second boundary constraint rule are determined based on training data of the AI model.

According to a second aspect, a monitoring system for an AI model is provided. The system includes:
an edge device, a trained AI model being deployed in the edge device; and
a monitoring node, arranged in the edge device, and configured to: obtain real-time data of the edge device; determine, from the real-time data, first input data of the AI model and first output data of the AI model; verify the first input data based on a matching result between the first input data and a first boundary constraint rule; and/or detect performance of the AI model based on a matching result between the first output data and a second boundary constraint rule.

According to a third aspect, an electronic device is provided. The electronic device includes:
a processor; and
a memory, configured to store executable instructions of the processor, where
the processor is configured to: read the executable instructions from the memory, and execute the executable instructions to implement the monitoring method for an AI model.

According to a fourth aspect, a computer-readable storage medium is provided, having a computer instruction stored thereon, and the computer instruction, when executed by a processor, implements the monitoring method for an AI model.

According to a fifth aspect, a computer program product is provided, including a computer program, and the computer program, when executed by a processor, implements the monitoring method for an AI model.

It can be learned from the foregoing technical solutions that, in the implementations of the present invention, real-time data of the edge device is obtained, where a trained AI model is deployed in the edge device; first input data of the AI model and first output data of the AI model are determined from the real-time data; and the first input data is verified based on a matching result between the first input data and a first boundary constraint rule; and/or performance of the AI model is detected based on a matching result between the first output data and a second boundary constraint rule, where the first boundary constraint rule and the second boundary constraint rule are determined based on training data of the AI model. It can be learned that, the AI model is monitored at the edge device, and the real-time data does not need to be sent to a cloud, thereby ensuring data security. In addition, the real-time data is directly analyzed at the edge device, to further ensure real-time performance.

### BRIEF DESCRIPTION OF THE DRAWINGS

The following describes preferred embodiments of the present invention in detail with reference to the accompanying drawings, to make a person of ordinary skill in the art have a clearer understanding of the foregoing and other features and advantages of the present invention. In the accompanying drawings:
FIG. 1 is a flowchart of a monitoring method for an AI model according to an implementation of the present invention;
FIG. 2 is a flowchart of generating a first boundary constraint rule according to an implementation of the present invention;
FIG. 3 is a flowchart of generating a second boundary constraint rule according to an implementation of the present invention;
FIG. 4 is a flowchart of monitoring an AI model according to an implementation of the present invention;
FIG. 5 is a structural diagram of a monitoring system for an AI model according to an implementation of the present invention;
FIG. 6 is a schematic diagram of arranging a monitoring node according to an implementation of the present invention;
FIG. 7A is a schematic diagram of arranging a monitoring node in a pipeline in a serial manner according to an implementation of the present invention;
FIG. 7B is a schematic diagram of arranging a monitoring node in a pipeline in a parallel manner according to an implementation of the present invention; and
FIG. 8 is an exemplary structural diagram of an electronic device according to an implementation of the present invention.

Reference numerals are as follows:

| Numbers | Meanings |
|---|---|
| 101 to 104 | Steps |
| 201 to 204 | Steps |
| 301 to 304 | Steps |
| 401 to 405 | Steps |
| 500 | Monitoring system for an AI model |
| 501 | Edge device |
| 502 | AI model |
| 503 | Monitoring node |
| 504 | Input data node |
| 505 | Output data node |
| 506 | Display interface |
| 600 | Deployed pipeline |
| 601 | Preprocessing element |
| 602 | First part |
| 603 | Inference node |
| 604 | Second part |
| 605 | Post-processing part |
| 700 | Deployed pipeline |
| 701 | Monitoring node |
| 702 | Inference node |
| 703 | Bus |
| 800 | Electronic device |
| 801 | Processor |
| 802 | Memory |

### DETAILED DESCRIPTION

To make the objectives, technical solutions, and advantages of the present invention clearer, the present invention is further described in detail below by using embodiments.

For brief and intuitive description, the following describes the solutions of the present invention by describing several representative implementations. Lots of details in the implementations are merely for understanding the solutions of the present invention. However, obviously, implementation of the technical solutions of the present invention may not be limited to these details. To avoid unnecessarily obscuring the solutions of the present invention, some implementations are not described in detail, but only frameworks are provided. In the following description, "include" means "include, but is not limited to", and "according to ..." means "at least according to ..., but is not limited to only according to ...". Because of the Chinese language habit, when the number of an element is not particularly specified below, it means that the element may be one or more, or may be understood as at least one.

An implementation of the present invention provides an AI model monitoring framework. A monitoring node is generated in advance, and real-time data on an edge device including the AI model is processed by using the monitoring node. Specifically, before deploying the AI model, a user may provide training data of the AI model on a local device (such as a PC) as reference data. The training data is classified, and a basic indicator, an advanced indicator, and/or a user-defined indicator are selected for quality check of input data of the AI model and drift monitoring of output of the AI model. Then, boundary constraint rules respectively for input data and output data of the AI model are generated, and these boundary constraint rules are deployed to the monitoring node in a pipeline (Pipeline). After the monitoring node is deployed on the edge device, the monitoring node processes real-time data based on the basic indicator, the advanced indicator, and/or the user-defined indicator, and the boundary constraint rules, to generate a monitoring result. In addition, a monitoring result with a prompt message may be directly displayed to the operation engineer on an enterprise monitoring application interface.

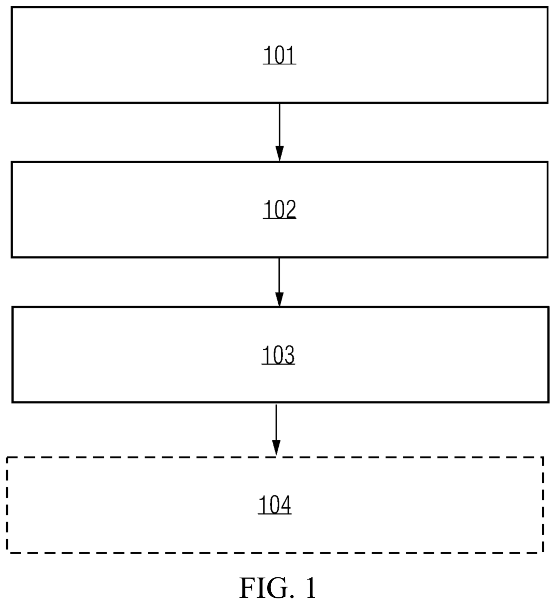

FIG. 1 is a flowchart of a monitoring method for an AI model according to an implementation of the present invention. The method is applicable to an edge device. As shown in FIG. 1, the method includes the following steps.

Step 101: Obtain real-time data of the edge device, where a trained AI model is deployed in the edge device.

Herein, the edge device is a device that provides an entry point to a core network of an enterprise or a service provider, for example, a router, a routing switch, an integrated access device (IAD), a multiplexer, and various metropolitan area network (MAN) and wide area network (WAN) access devices.

Preferably, the edge device is implemented as an industrial edge device, for example: (1) an industrial Ethernet switch; (2) an industrial fixed Ethernet router; (3) an industrial fixed Ethernet gateway; (4) an industrial fixed cellular router; (5) an industrial fixed cellular gateway; (6) an industrial wireless router and an access point; and (7) an industrial wireless gateway.

Step 102: Determine, from the real-time data, first input data of the AI model and first output data of the AI model.

Herein, the real-time data is classified, to obtain the first input data that is input into the AI model and the first output data that is output from the AI model.

Step 103: Verify the first input data based on a matching result between the first input data and a first boundary constraint rule.

The method may further include step 104 marked by a dashed box.

Step 104: Detect performance of the AI model based on a matching result between the first output data and a second boundary constraint rule, where the first boundary constraint rule and the second boundary constraint rule are determined based on training data of the AI model.

In the procedure of FIG. 1, step 101 to step 103 may be sequentially performed, and step 104 is not performed. Optionally, step 101 to step 102 may be sequentially performed, and then step 104 is performed, and step 103 is not performed. Alternatively, step 101 to step 102 may be sequentially performed, and step 103 and step 104 are performed simultaneously or not.

In an implementation, the method includes: determining a basic indicator of input data of the AI model; determining an advanced indicator of the input data based on the basic indicator of the input data; determining second input data of the AI model from the training data of the AI model; determining a value range of the advanced indicator of the input data based on the second input data; and determining the first boundary constraint rule based on the value range of the advanced indicator of the input data.

Herein, the basic indicator of the input data represents a basic quality metric of data that is input into the AI model, and may be implemented as a basic statistical feature of the input data, such as a minimum value in the input data, a maximum value in the input data, a type of the input data, a required value of the input data, an average value of the input data, a median of the input data, a variance of the input data, a standard deviation of the input data, an absolute value and a relative value of the input data, a percentage and a percentage point of the input data, a count and a frequency of the input data, a proportion and a ratio of the input data, a multiple and a square of the input data, a parallel comparison and a chain comparison of the input data, a quantity of missing values of an attribute in the input data, and the like. A user may select the basic indicator, or a default basic indicator may be automatically recommended to the user. The basic indicator establishes a baseline for monitoring.

For a more in-depth analysis requirement, an advanced indicator for monitoring check may be applied. The advanced indicator of the input data is an indicator derived from a basic indicator of one or more pieces of input data, for example, a proportion of values less than an average value, a proportion of values greater than an average value, a proportion of values not in a basic indicator value range that is determined by a minimum value and a maximum value, a missing rate derived by dividing a quantity of missing values of an attribute in the input data by a quantity of pieces of data, and the like.

A specific value of a basic indicator of the second input data is obtained, and a proper value range of an advanced indicator is determined based on the specific value of the basic indicator (in a determining process, it may be determined with the help of manual knowledge or automation), to serve as a basis for determining validity of subsequent input data.

The above illustratively describes typical examples of the basic indicator and the advanced indicator. A person skilled in the art may realize that such descriptions are merely exemplary and are not intended to limit the protection scope of the implementations of the present invention.

The verifying the first input data based on a matching result between the first input data and a first boundary constraint rule in step 103 includes at least one of the following.
(1) Determine, when a value of the advanced indicator of the first input data does not fall within the value range, that the first input data does not match the first boundary constraint rule, where a verification result indicates that the first input data is invalid.
   For example, it is assumed that the advanced indicator is the proportion of values less than an average value, and when the value of the advanced indicator that is determined based on the second input data, used as reference data, is 2%, it is considered that the value range of the advanced indicator is [0, 2%]. It is specified in the first boundary constraint rule that when the proportion of values less than an average value is greater than 2%, the input data is invalid. Then, a proportion of values less than an average value in the first input data is determined. When the proportion of values is greater than 2%, it is determined that the first input data does not match the first boundary constraint rule, and the first input data is considered to be invalid.
(2) Determine, when the value of the advanced indicator of the first input data falls within the value range, that the first input data matches the first boundary constraint rule, where the verification result indicates that the first input data is valid.

For example, it is assumed that the advanced indicator is the proportion of values greater than an average value, and when the value of the advanced indicator that is determined based on the second input data, used as reference data, is 5%, it is considered that the value range of the advanced indicator is [0, 5%]. It is specified in the first boundary constraint rule that when the proportion of values greater than an average value falls within an interval of [0, 5%], the input data is invalid. Then, a proportion of values greater than an average value in the first input data is determined. For example, when the proportion of values is 3%, it is determined that the first input data matches the first boundary constraint rule, and the first input data is considered to be valid.

In an implementation, the method includes: determining a basic indicator of input data of an AI model; determining an advanced indicator of the input data based on the basic indicator of the input data; determining a user-defined indicator of the input data based on the basic indicator of the input data and/or the advanced indicator of the input data; determining second input data of the AI model from the training data of the AI model; determining a first value range of the advanced indicator of the input data and a second value range of the user-defined indicator of the input data based on the second input data; and determining the first boundary constraint rule based on the first value range and the second value range.

It can be learned that the user-defined indicator of the input data is further determined based on the basic indicator of the input data and/or the advanced indicator of the input data. The user-defined indicator of the input data may be an indicator specified by the user. The user-defined indicator of the input data may be derived from an advanced indicator of a single or a plurality of pieces of input data, or may be derived from a basic indicator of a single or a plurality of pieces of input data and an advanced indicator of a single or a plurality of pieces of input data. For example, the basic indicator is an average value in the input data; the advanced indicator is a proportion of values less than the average value and a proportion of values greater than the average value; and the user-defined indicator is an average value between the proportion of values less than the average value and the proportion of values greater than the average value.

The above illustratively describes typical examples of the user-defined indicator. A person skilled in the art may realize that such descriptions are merely exemplary and are not intended to limit the protection scope of the implementations of the present invention.

The verifying the first input data based on a matching result between the first input data and a first boundary constraint rule in step 103 includes at least one of the following.
(1) Determine, when a value of the advanced indicator of the first input data does not fall within the first value range, that the first input data does not match the first boundary constraint rule, where a verification result indicates that the first input data is invalid.
(2) Determine, when the value of the advanced indicator of the first input data falls within the first value range, that the first input data matches the first boundary constraint rule, where the verification result indicates that the first input data is valid.
(3) Determine, when a value of the user-defined indicator of the first input data does not fall within the second value range, that the first input data does not match the first boundary constraint rule, where a verification result indicates that the first input data is invalid.
(4) Determine, when the value of the user-defined indicator of the first input data falls within the second value range, that the first input data matches the first boundary constraint rule, where the verification result indicates that the first input data is valid.

In an implementation, the method includes: determining a basic indicator of output data of the AI model; determining an advanced indicator of the output data based on the basic indicator of the output data; determining second output data of the AI model from the training data of the AI model; determining a value range of the advanced indicator of the output data based on the second output data; and determining the second boundary constraint rule based on the value range of the advanced indicator of the output data.

Similarly, the basic indicator of the output data represents a basic quality metric of output data of the AI model, and may be implemented as a basic statistical feature of the output data. For example, the basic indicator of the output data may include a minimum value in the output data, a maximum value in the output data, a type of the output data, a required value of the output data, an average value of the output data, a median of the output data, a variance of the output data, a standard deviation of the output data, an absolute value and a relative value of the output data, a percentage and a percentage point of the output data, a count and a frequency of the output data, a proportion and a ratio of the output data, a multiple and a square of the output data, a parallel comparison and a chain comparison of the output data, a quantity of missing values of an attribute in the output data, and the like. The user may select the basic indicator of the output data, or a default basic indicator of the output data may be automatically recommended to the user. The advanced indicator of the output data is an indicator derived from a basic indicator of one or more pieces of output data, for example, a proportion of values less than an average value, a proportion of values greater than an average value, a proportion of values not in a basic indicator value range that is determined by a minimum value and a maximum value, a missing rate derived by dividing a quantity of missing values of an attribute in the output data by a quantity of pieces of data, and the like.

The detecting performance of the AI model based on a matching result between the first output data and a second boundary constraint rule in step 104 includes at least one of the following.
(1) Determine, when a value of an advanced indicator of the first output data does not fall within the value range, that the first output data does not match the second boundary constraint rule, where a detection result indicates that the performance of the AI model is unqualified.
(2) Determine, when the value of the advanced indicator of the first output data falls within the value range, that the first output data matches the second boundary constraint rule, where the detection result indicates that the performance of the AI model is qualified.

In an implementation, the method includes: determining a basic indicator of output data of the AI model; determining an advanced indicator of the output data based on the basic indicator of the output data; determining a user-defined indicator of the output data based on the basic indicator of the output data and/or the advanced indicator of the output data; determining second output data of the AI model from the training data of the AI model; determining a first value range of the advanced indicator of the output data and a second value range of the user-defined indicator of the output data based on the second output data; and determining the second boundary constraint rule based on the first value range and the second value range.

It can be learned that the user-defined indicator of the output data is further determined based on the basic indicator of the output data and/or the advanced indicator of the output data. The user-defined indicator of the output data may be an indicator specified by the user. The user-defined indicator of the output data may be derived from an advanced indicator of a single or a plurality of pieces of output data, or may be derived from a basic indicator of a single or a plurality of pieces of output data and an advanced indicator of a single or a plurality of pieces of output data. For example, the basic indicator of the output data is an average value in the output data; the advanced indicator of the output data is a proportion of values less than the average value and a proportion of values greater than the average value; and the user-defined indicator of the output data is an average value between the proportion of values less than the average value and the proportion of values greater than the average value, and the like.

The detecting performance of the AI model based on a matching result between the first output data and a second boundary constraint rule in step 104 includes at least one of the following.
(1) Determine, when a value of an advanced indicator of the first output data does not fall within the first value range, that the first output data does not match the second boundary constraint rule, where a detection result indicates that the performance of the AI model is unqualified.
(2) Determine, when the value of the advanced indicator of the first output data falls within the first value range, that the first output data matches the second boundary constraint rule, where the detection result indicates that the performance of the AI model is qualified.
(3) Determine, when a value of a user-defined indicator of the first output data does not fall within the second value range, that the first output data does not match the second boundary constraint rule, where a detection result indicates that the performance of the AI model is unqualified.
(4) Determine, when the value of the user-defined indicator of the second output data falls within the second value range, that the first output data matches the second boundary constraint rule, where the detection result indicates that the performance of the AI model is qualified.

In an implementation, the method includes: rejecting to input the first input data into the AI model when the verification result indicates that the first input data is invalid.

It can be learned that when the first input data is invalid, the first input data may be rejected to be input into the AI model, thereby ensuring the performance of the AI model.

In an implementation, the method includes: continuing to input the first input data into the AI model when the verification result indicates that the first input data is invalid.

It can be learned that when the first input data is invalid, the first input data may continue to be input into the AI model, thereby ensuring real-time performance.

In an implementation, the method includes: determining, based on a user trigger instruction when the verification result indicates that the first input data is invalid, to reject to input the first input data into the AI model or continue to input the first input data into the AI model.

It can be learned that when the first input data is invalid, a subsequent step to be performed may be determined based on user selection, thereby enriching a selection possibility of the user. In an implementation, the method includes: sending, when the verification result indicates that the first input data is invalid, a first prompt message used for prompting that the first input data is invalid, the first prompt message being adapted to be presented on a display interface; and sending, when the detection result indicates that the performance of the AI model is unqualified, a second prompt message used for prompting that the performance of the AI model is unqualified, the second prompt message being adapted to be presented on the display interface.

The first prompt message may include a specific value of a basic indicator, an advanced indicator, or a user-defined indicator that is of the first input data and that participates in determining the first boundary constraint rule, so that it is convenient for the user to learn about a reason why the data is invalid. The second prompt message may include a specific value of a basic indicator, an advanced indicator, or a user-defined indicator that is of the first output data and that participates in determining the second boundary constraint rule, so that it is convenient for the user to learn about a reason why the performance of the model is unqualified. It can be learned that a monitoring result with a prompt message may be directly displayed to the operation engineer on an enterprise monitoring application interface.

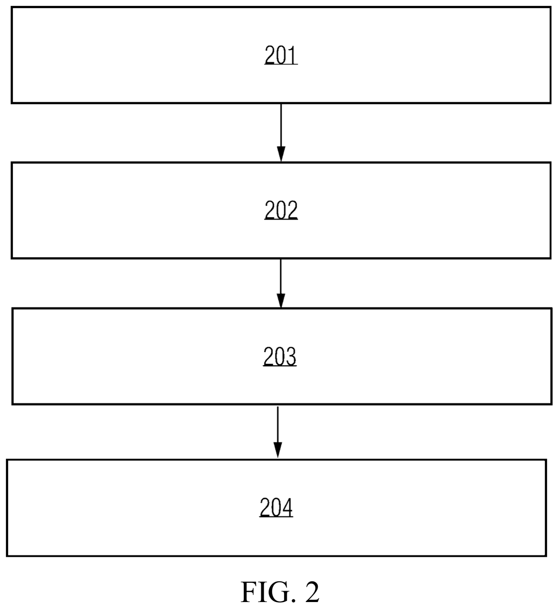

FIG. 2 is a flowchart of generating a first boundary constraint rule according to an implementation of the present invention. As shown in FIG. 2, the method includes the following steps.

Step 201: Classify training data of an AI model, to obtain input data of the AI model. Herein, the training data of the AI model is data used in a training process of the AI model. The AI model is trained based on the training data, to obtain a trained AI model.

Step 202: Determine a basic indicator, an advanced indicator, and/or a user-defined indicator of the input data.

Step 203: Parse the input data to obtain a specific value of the basic indicator. A value range of the advanced indicator and/or the user-defined indicator is determined based on the specific value of the basic indicator.

Step 204: Generate a first boundary constraint rule based on the value range of the advanced indicator and/or the user-defined indicator. It is specified in the first boundary constraint rule that: when a value of an advanced indicator and/or a user-defined indicator of input data (usually real-time input data of the AI model) that is verified by reference subsequently does not fall within a respective value range of the advanced indicator and/or the user-defined indicator, the input data is invalid.

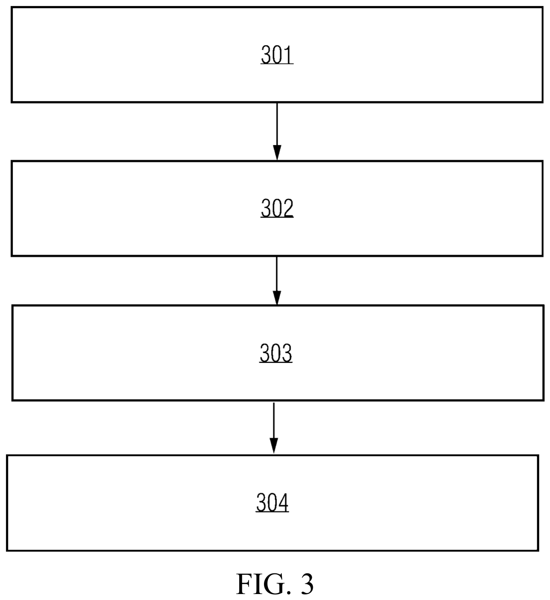

FIG. 3 is a flowchart of generating a second boundary constraint rule according to an implementation of the present invention. As shown in FIG. 3, the method includes the following steps.

Step 301: Classify training data of an AI model, to obtain output data of the AI model. Herein, the training data of the AI model is data used in a training process of the AI model. The AI model is trained based on the training data, to obtain a trained AI model.

Step 302: Determine a basic indicator, an advanced indicator, and/or a user-defined indicator of the output data.

Step 303: Parse the output data to obtain a specific value of the basic indicator. A value range of the advanced indicator and/or the user-defined indicator is determined based on the specific value of the basic indicator.

Step 304: Generate a second boundary constraint rule based on the value range of the advanced indicator and/or the user-defined indicator. It is specified in the second boundary constraint rule that: when a value of an advanced indicator and/or a user-defined indicator of output data (usually real-time output data of the AI model) that is verified by reference subsequently does not fall within a respective value range of the advanced indicator and/or the user-defined indicator, performance of the AI model is unqualified.

In the procedures of FIG. 2 and FIG. 3, the training data is used as reference data for generating the first boundary constraint rule and the second boundary constraint rule. The training data is used for training the AI model in advance. Therefore, the first boundary constraint rule and the second boundary constraint rule that are generated by using the training data as reference data are more accurate, and better match the performance of the model. After the first boundary constraint rule and the second boundary constraint rule are generated, the AI model may be monitored by using the first boundary constraint rule and the second boundary constraint rule.

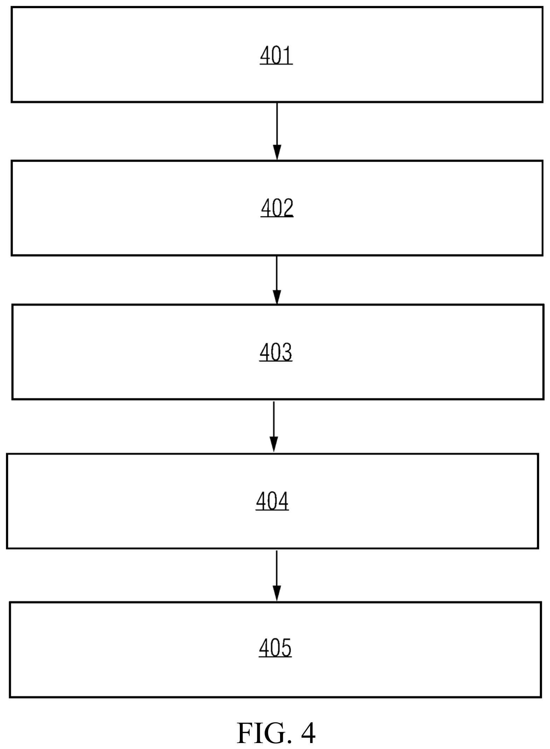

FIG. 4 is a flowchart of monitoring an AI model according to an implementation of the present invention. As shown in FIG. 4, the method includes the following steps.

Step 401: Obtain real-time data of the edge device, where a trained AI model is deployed in the edge device.

Step 402: Classify the real-time data, to determine input data of the AI model and output data of the AI model.

Step 403: Verify the input data based on a matching result between the input data and a first boundary constraint rule.

Step 404: Detect performance of the AI model based on a matching result between the output data and a second boundary constraint rule.

Step 405: Present, on a display interface when a verification result indicates that the input data is invalid, a first prompt message used for prompting that the input data is invalid; and present, on the display interface when a detection result indicates that the performance of the AI model is unqualified, a second prompt message used for prompting that the performance of the AI model is unqualified. Preferably, specific values of a basic indicator, an advanced indicator, and/or a user-defined indicator of the input data and specific values of a basic indicator, an advanced indicator, and/or a user-defined indicator of the output data are further presented, so that it is convenient for a user to locate errors.

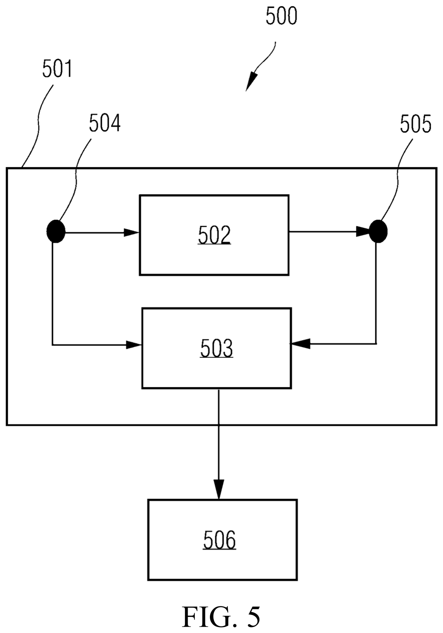

FIG. 5 is a structural diagram of a monitoring system for an AI model according to an implementation of the present invention. The monitoring system 500 for an AI model includes:
an edge device 501, a trained AI model 502 being deployed in the edge device 501; and
a monitoring node 503, arranged in the edge device 501, and configured to: obtain real-time data of the edge device 501; determine, from the real-time data, first input data of the AI model 502 and first output data of the AI model 502; verify the first input data based on a matching result between the first input data and a first boundary constraint rule; and/or detect performance of the AI model 502 based on a matching result between the first output data and a second boundary constraint rule.

For example, one input end of the monitoring node 503 is connected to an input data node 504 of the AI model 502, to obtain first input data from the input data node 504; and another input end of the monitoring node 503 is connected to an output data node 505 of the AI model 502, to obtain first output data from the output data node 505.

Preferably, the monitoring system 500 for an AI model includes a display interface 506, configured to present a first prompt message prompting that first input data is invalid, a second prompt message prompting that performance of an artificial intelligence model is unqualified, and specific values of basic indicators, advanced indicators, and/or user-defined indicators of input data and output data, so that it is convenient for a user to locate errors.

In an implementation, the monitoring node 503 includes a first part and a second part. The first part is arranged at an input end of the AI model 502, and is configured to verify the first input data based on the matching result between the first input data and the first boundary constraint rule. The second part is arranged at an output end of the AI model 502, and is configured to detect performance of the artificial intelligence model based on the matching result between the first output data and the second boundary constraint rule.

It can be learned that the monitoring node 503 is divided, to facilitate flexible deployment of the monitoring node 503.

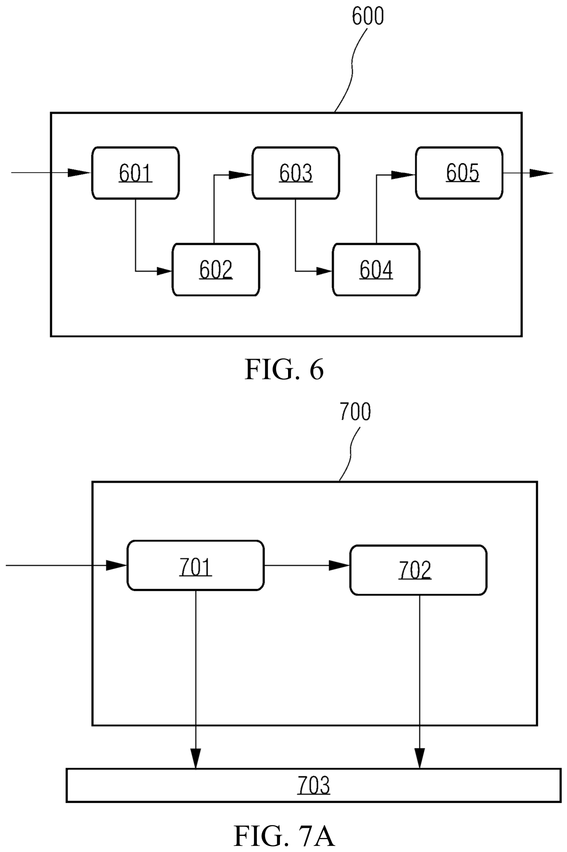

FIG. 6 is a schematic diagram of arranging a monitoring node according to an implementation of the present invention. In FIG. 6, a trained AI model is deployed on an inference node 603. Input data of the AI model is sent to a preprocessing element 601. The preprocessing element 601 performs preprocessing (such as data cleaning and data feature extraction) on the input data. The preprocessed input data enters a first part 602 divided from the monitoring node 503. The first part 602 verifies the preprocessed input data based on a matching result between the preprocessed input data and the first boundary constraint rule. The first part 602 sends a verification result and the preprocessed input data to the inference node 603. The AI model does not perform inference on the preprocessed input data after the verification result indicates that the preprocessed input data is invalid; and after the verification result indicates that the preprocessed input data is valid, the AI model performs inference on the preprocessed input data, and obtains output data as an inference result. The output data is provided to a second part 603 divided from the monitoring node 503. The second part 603 detects performance of the AI model based on a matching result between the output data and the second boundary constraint rule, and sends a detection result.

The monitoring node including the first boundary constraint rule and the second boundary constraint rule and the trained AI model may be deployed in a pipeline, for example, an industrial on-site pipeline.

In an implementation, the first part is connected in series between an input end of the AI model and a data source of the first input data. Preferably, the first part is configured to perform at least one of the following.
(1) Reject to input the first input data into the AI model when the verification result indicates that the first input data is invalid.
(2) Continue to input the first input data into the AI model when the verification result indicates that the first input data is invalid.
(3) Determine, based on a user trigger instruction when the verification result indicates that the first input data is invalid, to reject to input the first input data into the AI model or continue to input the first input data into the AI model.

Therefore, when the first input data is invalid, a subsequent step to be performed may be determined based on a plurality of policies.

In an implementation, the first part is connected in parallel between the input end of the AI model and the data source of the first input data. Preferably, the first part is configured to send, when the verification result indicates that the first input data is invalid, a first prompt message used for prompting that the first input data is invalid, the first prompt message being adapted to be presented on a display interface.

A deployment location and a processing policy of the first part are listed above in detail. A person skilled in the art may realize that such descriptions are merely exemplary and are not intended to limit the protection scope of the implementations of the present invention. For example, the monitoring node may alternatively be arranged in a hybrid manner including a series manner and a parallel manner.

FIG. 7A is a schematic diagram of arranging a monitoring node in a pipeline in a serial manner according to an implementation of the present invention. In FIG. 7A, a monitoring node 701 obtains input data of a trained AI model, and the AI model is deployed on an inference node 702. In addition, the monitoring node 701 sends a verification result and the input data to the inference node 702. The inference node 702 may ignore the verification result, and performs inference on the input data. Alternatively, when the verification result indicates that the input data is invalid, the inference node 702 may stop performing inference on the input data. The monitoring node 701 sends an inference result to a bus 703. The inference node 702 sends an inference result to a bus 703.

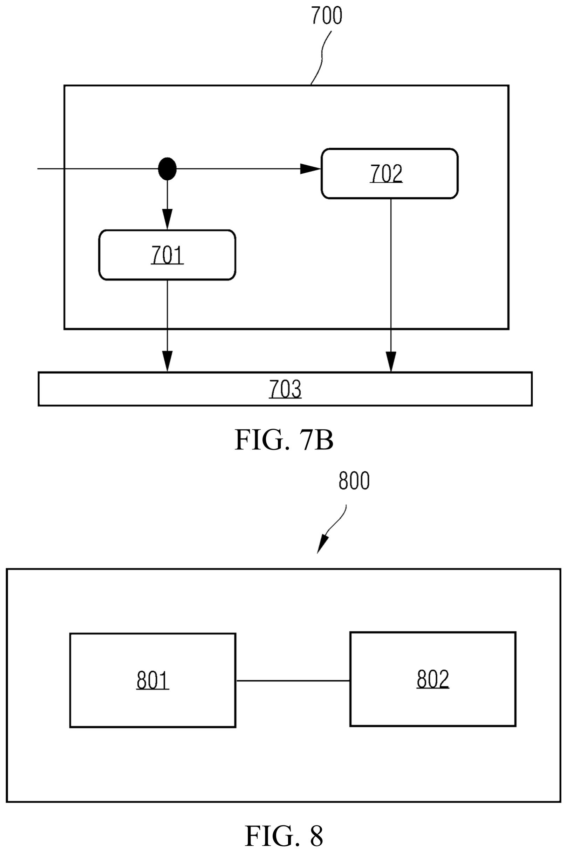

FIG. 7B is a schematic diagram of arranging a monitoring node in a pipeline in a parallel manner according to an implementation of the present invention. In FIG. 7B, a monitoring node 701 obtains input data of a trained AI model, and the AI model is deployed on an inference node 702. In addition, the monitoring node 701 sends a verification result to a bus 703. The inference node 702 obtains the input data of the trained AI model, and performs inference on the input data. The monitoring node 702 sends an inference result to the bus 703.

In an implementation of the present invention, an electronic device having a processor-memory architecture is further proposed. FIG. 8 is an exemplary structural diagram of an electronic device according to an implementation of the present invention. As shown in FIG. 8, an electronic device 800 includes a processor 801, a memory 802, and a computer program that is stored in the memory 802 and that can be run on the processor 801, and the computer program, when executed by the processor 801, implements the monitoring method for an AI model according to any one of the foregoing descriptions. The memory 802 may be specifically implemented as various storage media such as an electrically erasable programmable read-only memory (EEPROM), a Flash memory (Flash memory), and a programmable read-only memory (PROM). The processor 801 may be implemented to include one or more central processing units or one or more field programmable gate arrays, where the field programmable gate array integrates one or more central processing unit cores. Specifically, the central processing unit or the central processing unit core can be implemented as a CPU, an MCU, a DSP, or the like.

It should be noted that not all steps and modules in the procedures and the structural diagrams are necessary, and some steps or modules may be omitted according to an actual requirement. An execution sequence of the steps is not fixed and may be adjusted according to a requirement. Division of the modules is merely functional division for ease of description. During actual implementation, one module may be separately implemented by a plurality of modules, and functions of the plurality of modules may also be implemented by a same module. These modules may be located in a same device, or may be located in different devices.

Hardware modules in the implementations may be implemented in a mechanical manner or an electronic manner. For example, one hardware module may include a specifically designed permanent circuit or logical device (for example, a dedicated processor, such as an FPGA or an ASIC) for completing a specific operation. The hardware module may alternatively include a programmable logic device or circuit (for example, including a general-purpose processor or another programmable processor) configured temporarily by software for performing a specific operation. Whether the hardware module is specifically implemented in a mechanical manner, by using a dedicated permanent circuit, or by using a temporarily configured circuit (for example, configured by software) may be determined based on consideration of costs and time.

The foregoing descriptions are merely preferred implementations of the present invention, and are not intended to limit the protection scope of the present invention. Any modification, equivalent replacement, improvement, or the like made within the spirit and principle of the present invention shall be included in the protection scope of the present invention.

## Claims

1. A monitoring method for an artificial intelligence model, wherein the method is applicable to an edge device, and the method comprises:
obtaining (101) real-time data of the edge device, wherein a trained artificial intelligence model is deployed in the edge device;
determining (102), from the real-time data, first input data of the artificial intelligence model and first output data of the artificial intelligence model; and
verifying the first input data based on a matching result between the first input data and a first boundary constraint rule (103); and/or detecting performance of the artificial intelligence model based on a matching result between the first output data and a second boundary constraint rule (104), wherein
the first boundary constraint rule and the second boundary constraint rule are determined based on training data of the artificial intelligence model.

2. The method according to claim 1, comprising:
determining a basic indicator of input data of the artificial intelligence model;
determining an advanced indicator of the input data based on the basic indicator of the input data;
determining second input data of the artificial intelligence model from the training data of the artificial intelligence model;
determining a value range of the advanced indicator of the input data based on the second input data; and
determining the first boundary constraint rule based on the value range of the advanced indicator of the input data, wherein
the verifying the first input data based on a matching result between the first input data and a first boundary constraint rule (103) comprises at least one of the following:
determining, when a value of the advanced indicator of the first input data does not fall within the value range, that the first input data does not match the first boundary constraint rule, wherein a verification result indicates that the first input data is invalid; and
determining, when the value of the advanced indicator of the first input data falls within the value range, that the first input data matches the first boundary constraint rule, wherein the verification result indicates that the first input data is valid.

3. The method according to claim 1, comprising:
determining a basic indicator of input data of an artificial intelligence model;
determining an advanced indicator of the input data based on the basic indicator of the input data;
determining a user-defined indicator of the input data based on the basic indicator of the input data and/or the advanced indicator of the input data;
determining second input data of the artificial intelligence model from the training data of the artificial intelligence model;
determining a first value range of the advanced indicator of the input data and a second value range of the user-defined indicator of the input data based on the second input data; and
determining the first boundary constraint rule based on the first value range and the second value range, wherein
the verifying the first input data based on a matching result between the first input data and a first boundary constraint rule (103) comprises at least one of the following:
determining, when a value of the advanced indicator of the first input data does not fall within the first value range, that the first input data does not match the first boundary constraint rule, wherein a verification result indicates that the first input data is invalid;
determining, when the value of the advanced indicator of the first input data falls within the first value range, that the first input data matches the first boundary constraint rule, wherein the verification result indicates that the first input data is valid;
determining, when a value of the user-defined indicator of the first input data does not fall within the second value range, that the first input data does not match the first boundary constraint rule, wherein a verification result indicates that the first input data is invalid; and
determining, when the value of the user-defined indicator of the first input data falls within the second value range, that the first input data matches the first boundary constraint rule, wherein the verification result indicates that the first input data is valid.

4. The method according to claim 1, comprising:
determining a basic indicator of output data of the artificial intelligence model;
determining an advanced indicator of the output data based on the basic indicator of the output data;
determining second output data of the artificial intelligence model from the training data of the artificial intelligence model;
determining a value range of the advanced indicator of the output data based on the second output data; and
determining the second boundary constraint rule based on the value range of the advanced indicator of the output data, wherein
the detecting performance of the artificial intelligence model based on a matching result between the first output data and a second boundary constraint rule (104) comprises at least one of the following:
determining, when a value of an advanced indicator of the first output data does not fall within the value range, that the first output data does not match the second boundary constraint rule, wherein a detection result indicates that the performance of the artificial intelligence model is unqualified; and
determining, when the value of the advanced indicator of the first output data falls within the value range, that the first output data matches the second boundary constraint rule, wherein the detection result indicates that the performance of the artificial intelligence model is qualified.

5. The method according to claim 1, comprising:
determining a basic indicator of output data of the artificial intelligence model;
determining an advanced indicator of the output data based on the basic indicator of the output data;
determining a user-defined indicator of the output data based on the basic indicator of the output data and/or the advanced indicator of the output data;
determining second output data of the artificial intelligence model from the training data of the artificial intelligence model;
determining a first value range of the advanced indicator of the output data and a second value range of the user-defined indicator of the output data based on the second output data; and
determining the second boundary constraint rule based on the first value range and the second value range, wherein
the detecting performance of the artificial intelligence model based on a matching result between the first output data and a second boundary constraint rule (104) comprises at least one of the following:
determining, when a value of an advanced indicator of the first output data does not fall within the first value range, that the first output data does not match the second boundary constraint rule, wherein a detection result indicates that the performance of the artificial intelligence model is unqualified;
determining, when the value of the advanced indicator of the first output data falls within the first value range, that the first output data matches the second boundary constraint rule, wherein the detection result indicates that the performance of the artificial intelligence model is qualified;
determining, when a value of a user-defined indicator of the first output data does not fall within the second value range, that the first output data does not match the second boundary constraint rule, wherein a detection result indicates that the performance of the artificial intelligence model is unqualified; and
determining, when the value of the user-defined indicator of the second output data falls within the second value range, that the first output data matches the second boundary constraint rule, wherein the detection result indicates that the performance of the artificial intelligence model is qualified.

6. The method according to any one of claims 1 to 5, comprising at least one of the following:
rejecting to input the first input data into the artificial intelligence model when the verification result indicates that the first input data is invalid;
continuing to input the first input data into the artificial intelligence model when the verification result indicates that the first input data is invalid; and
determining, based on a user trigger instruction when the verification result indicates that the first input data is invalid, to reject to input the first input data into the artificial intelligence model or continue to input the first input data into the artificial intelligence model.

7. The method according to any one of claims 1 to 5, comprising:
sending, when the verification result indicates that the first input data is invalid, a first prompt message used for prompting that the first input data is invalid, the first prompt message being adapted to be presented on a display interface; and
sending, when the detection result indicates that the performance of the artificial intelligence model is unqualified, a second prompt message used for prompting that the performance of the artificial intelligence model is unqualified, the second prompt message being adapted to be presented on the display interface.

8. A monitoring system for an artificial intelligence model, comprising:
an edge device (501), a trained artificial intelligence model (502) being deployed in the edge device (501); and
a monitoring node (503), arranged in the edge device (501), and configured to: obtain real-time data of the edge device (501); determine, from the real-time data, first input data of the artificial intelligence model (502) and first output data of the artificial intelligence model (502); verify the first input data based on a matching result between the first input data and a first boundary constraint rule; and/or detect performance of the artificial intelligence model (502) based on a matching result between the first output data and a second boundary constraint rule.

9. The system according to claim 8, wherein the monitoring node (503) comprises a first part and a second part;
the first part is arranged at an input end of the artificial intelligence model, and is configured to verify the first input data based on the matching result between the first input data and the first boundary constraint rule; and
the second part is arranged at an output end of the artificial intelligence model, and is configured to detect the performance of the artificial intelligence model based on the matching result between the first output data and the second boundary constraint rule.

10. The system according to claim 8, wherein
the first part is connected in series between an input end of the artificial intelligence model and a data source of the first input data.

11. The system according to claim 10, wherein the first part is configured to perform at least one of the following:
rejecting to input the first input data into the artificial intelligence model when a verification result indicates that the first input data is invalid;
continuing to input the first input data into the artificial intelligence model when the verification result indicates that the first input data is invalid; and
determining, based on a user trigger instruction when the verification result indicates that the first input data is invalid, to reject to input the first input data into the artificial intelligence model or continue to input the first input data into the artificial intelligence model.

12. The system according to claim 8, wherein
the first part is connected in parallel between an input end of the artificial intelligence model and a data source of the first input data.

13. The system according to claim 12, wherein the first part is configured to send, when a verification result indicates that the first input data is invalid, a first prompt message used for prompting that the first input data is invalid, the first prompt message being adapted to be presented on a display interface.

14. An electronic device, comprising:
a processor (801); and
a memory (802), configured to store executable instructions of the processor (801), wherein
the processor (801) is configured to: read the executable instructions from the memory (802), and execute the executable instructions to implement the monitoring method for an artificial intelligence model according to any one of claims 1 to 7.

15. A computer-readable storage medium, having a computer instruction stored thereon, wherein the computer instruction, when executed by a processor, implements the monitoring method for an artificial intelligence model according to any one of claims 1 to 7.

16. A computer program product, comprising a computer program, the computer program, when executed by a processor, implementing the monitoring method for an artificial intelligence model according to any one of claims 1 to 7.
